# EUROPEAN PATENT APPLICATION

(11) **EP 4 838 971 A1**
(43) Date of publication of application: **11.11.2026**
(21) Application number: 24914594.7
(22) Date of filing: 03.01.2024
(51) Int. Cl.: H04W 64/00

(54) **COMMUNICATION METHOD, DEVICE, SYSTEM AND STORAGE MEDIUM**

(71) Applicant: Beijing Xiaomi Mobile Software Co., Ltd., Beijing 100085 (CN)
(72) Inventor: GONG, Yubing, Beijing 100085 (CN); MAO, Yuxin, Beijing 100085 (CN)
(74) Representative: Gunzelmann, Rainer
(86) International application number: PCT/CN2024/070478
(87) International publication number: WO 2025/145361

(57) **Abstract**

The embodiments of the present disclosure relate to the technical field of communications. Disclosed are a communication method and apparatus, and a computer-readable storage medium. The communication method comprises: receiving a first message sent by a second network element, and sending a second message to a first terminal via the second network element, wherein the first message is used for indicating a change in a first user plane connection between the first terminal and a first network element, and the second message is used for notifying the first terminal to change the first user plane connection. The embodiments of the present disclosure provide a solution for how to change a user plane connection between a first terminal and a first network element.

## Description

### TECHNICAL FIELD

The present disclosure relates to the field of communication technology, and specifically to a communication method, a communication device, a communication system, and a storage medium.

### BACKGROUND

A terminal can perform positioning using either the user plane positioning method or the control plane positioning method. User plane positioning enables the communication system to achieve more efficient communication load, allowing a single session to handle multiple transactions and supporting various positioning methods.

### SUMMARY

Embodiments of the present disclosure provide a communication method, a communication device, a communication system, and a storage medium.

Embodiments of a first aspect of the present disclosure provide a communication method, applied in a first network element, including:
receiving a first message sent by a second network element, wherein the first message indicates to change a first user plane connection between a first terminal and the first network element;
sending a second message to the first terminal via the second network element, wherein the second message is configured to notify the first terminal to change the first user plane connection.

Embodiments of a second aspect of the present disclosure provide a communication method, applied in a second network element, including:
sending a first message to a first network element, wherein the first message indicates to change a first user plane connection between a first terminal and the first network element; and
sending a second message from the first network element to the first terminal, wherein the second message is configured to notify the first terminal to change the first user plane connection.

Embodiments of a third aspect of the present disclosure provide a communication method, applied in a first terminal, comprising:
receiving a second message sent by a first network element via a second network element, wherein the second message is configured to notify the first terminal to change a first user plane connection with the first network element.

Embodiments of a fourth aspect of the present disclosure provide a first network element, including:
a first transceiver module, configured to receive a first message sent by a second network element, and send a second message to a first terminal via the second network element;
wherein, the first message indicates to change a first user plane connection between the first terminal and the first network element;
the second message is configured to notify the first terminal to change the first user plane connection.

Embodiments of a fifth aspect of the present disclosure provide a second network element, including:
a second transceiver module, configured to send a first message to a first network element, and send a second message from the first network element to a first terminal;
wherein the first message indicates to change a first user plane connection between the first terminal and the first network element; and
the second message is configured to notify the first terminal to change the first user plane connection.

Embodiments of a sixth aspect of the present disclosure provide a first terminal, including:
a third transceiver module, configured to receive a second message sent by a first network element via a second network element, wherein the second message is configured to notify the first terminal to change a first user plane connection with the first network element.

Embodiments of a seventh aspect of the present disclosure provide a first network element, including:
one or more processors;
wherein, the first network element is configured to implement optional implementations of the first aspect.

Embodiments of an eighth aspect of the present disclosure provide a second network element, including:
one or more processors;
wherein, the second network element is configured to implement optional implementations of the second aspect.

Embodiments of a ninth aspect of the present disclosure provide a first terminal, including:
one or more processors;
wherein, the first terminal is configured to implement optional implementations of the third aspect.

Embodiments of a tenth aspect of the present disclosure provide a communication system, including a first terminal, a first network element and a second network element, wherein
the first network element is configured to receive a first message sent by the second network element, the first message indicates to change a first user plane connection between the first terminal and the first network element;
the first network element is configured to send a second message to the first terminal via the second network element, the second message is configured to notify the first terminal to change the first user plane connection.

Embodiments of an eleventh aspect of the present disclosure provide a computer-readable storage medium. The computer-readable storage medium stores executable instructions that, when loaded and executed by a processor, implement the method described in optional implementations of the first aspect, or the second aspect, or the third aspect.

It should be understood that the above general description and the subsequent detailed description are only exemplary and explanatory, and cannot limit the disclosure.

### BRIEF DESCRIPTION OF THE DRAWINGS

The accompanying drawings are incorporated into the specification and form a part of the specification, illustrating embodiments in accordance with the present disclosure and used together with the specification to explain the principles of the present disclosure.
FIG. 1a is a block diagram of a wireless communication system according to an embodiment of the present disclosure.
FIG. 1b is a schematic flowchart of a wireless communication system according to an embodiment of the present disclosure.
FIG. 2a is a flowchart of a communication method according to an embodiment of the present disclosure.
FIG. 2b is a flowchart of a communication method according to an embodiment of the present disclosure.
FIG. 3 is a schematic flowchart of a communication method according to an embodiment of the present disclosure.
FIG. 4 is a schematic flowchart of a communication method according to an embodiment of the present disclosure.
FIG. 5 is a schematic flowchart of a communication method according to an embodiment of the present disclosure.
FIG. 6a is a block diagram of a first network element according to an embodiment of the present disclosure.
FIG. 6b is a block diagram of a second network element according to an embodiment of the present disclosure.
FIG. 6c is a block diagram of a first terminal according to an embodiment of the present disclosure.
FIG. 7a is a schematic flowchart of a communication method according to an embodiment of the present disclosure.
FIG. 7b is a schematic flowchart of a communication method according to an embodiment of the present disclosure.
FIG. 8a is a block diagram of a communication device according to embodiments of the present disclosure.
FIG. 8b is a block diagram of a chip according to embodiments of the present disclosure.

### DETAILED DESCRIPTION

Embodiments of the present disclosure provide a method for obtaining data, a device, and a storage medium.

In a first aspect, embodiments of the present disclosure provide a communication method, applied in a first network element, including:
receiving a first message sent by a second network element, wherein the first message indicates to change a first user plane connection between a first terminal and the first network element;
sending a second message to the first terminal via the second network element, wherein the second message is configured to notify the first terminal to change the first user plane connection.

In the above embodiments, changing the user plane connection between the first terminal and the first network element can be achieved.

In some embodiments of the first aspect, the first message includes at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
   and/or,
the second message includes at least one of:
   an ID of the first network element;
   a correlation ID corresponding to the first network element;
   an IP address of the first network element;
   first indication information, indicating to change the first user plane connection;
   second indication information, indicating to release the first user plane connection; or
   third indication information, indicating a condition for releasing the first user plane connection.

In some embodiments of the first aspect, the method further includes:
receiving a fifth message sent by the first terminal via the second network element, wherein the fifth message is configured to notify that the first user plane connection has been released; and
sending a sixth message to the second network element, wherein the sixth message is configured to notify that the first user plane connection has been changed.

In the above embodiments, when the first network element learns that the user plane connection between the first network element and the first terminal has been released, it can notify the second network element that the user plane connection has changed, so that the second network element can know the change status of the user plane connection between the first network element and the first terminal.

In some embodiments of the first aspect, the first indication information indicates to establish a second user plane connection between the first terminal and a third network element, and the method further includes:
sending a seventh message to the third network element, wherein the seventh message is configured to transmit context information of the first terminal.

In the above embodiments, when the first network element learns that the user plane connection between the first terminal and the third network element has been established, it can transmit the context information of the first terminal to the third network element to provide a basis for subsequent operations.

In some embodiments of the first aspect, the first indication information indicates to establish a third user plane connection between the first terminal and the first network element.

In the above embodiments, when the first network element learns that the old user plane connection between the first network element and the first terminal has been released, it can notify the second network element that the user plane connection between the second network element and the first terminal has been rebuilt as the third user plane connection, so that the second network element can know the change status of the user plane connection between the first network element and the first terminal.

In some embodiments of the first aspect, before receiving the first message sent by the second network element, the method further includes:
sending an eighth message to the second network element, wherein the eighth message indicates to change the first user plane connection.

In the above embodiments, the first network element can trigger the process of changing the user plane connection with the first terminal, and indicate the change of the user plane connection with the first terminal in the message sent to the second network element, thereby achieving the change of the user plane connection.

In a second aspect, embodiments of the present disclosure provide a communication method, applied in a second network element, including:
sending a first message to a first network element, wherein the first message indicates to change a first user plane connection between a first terminal and the first network element; and
sending a second message from the first network element to the first terminal, wherein the second message is configured to notify the first terminal to change the first user plane connection.

In some embodiments of the second aspect, the first message includes at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
   and/or,
the second message includes at least one of:
   an identity (ID) of the first network element;
   a correlation ID corresponding to the first network element;
   an IP address of the first network element;
   first indication information, indicating to change the first user plane connection;
   second indication information, indicating to release the first user plane connection; or
   third indication information, indicating a condition for releasing the first user plane connection.

In some embodiments of the second aspect, the method further includes:
receiving a sixth message sent by the first network element, wherein the sixth message is configured to notify the second network element that the first user plane connection has been changed. D

In some embodiments of the second aspect, before sending the first message to the first network element, the method further includes:
receiving an eighth message sent by the first network element, wherein the eighth message indicates to change the first user plane connection.

In a third aspect, embodiments of the present disclosure provide a communication method, applied in a first terminal, including:
receiving a second message sent by a first network element via a second network element, wherein the second message is configured to notify the first terminal to change a first user plane connection with the first network element.

In some embodiments of the third aspect, the method further includes:
keeping a protocol data unit (PDU) session after releasing the first user plane connection.

In the above embodiments, the first terminal can release the user plane connection with the first network element based on the received second message, and keep the PDU session in the case of no other active user plane connections, in order to provide a basis for establishing the new user plane connection in the future and reduce the delay of establishing the user plane connection.

In some embodiments of the third aspect, the first indication information indicates to establish a second user plane connection between the first terminal and a third network element, and the method further includes:
sending a third message to the third network element via the second network element, wherein the third message is configured to request to establish the second user plane connection with the third network element.

In some embodiments of the third aspect, the method further includes:
receiving a fourth message sent by the third network element via the second network element, wherein the fourth message is a response message to the third message.

In some embodiments of the third aspect, the first indication information indicates to establish a third user plane connection between the first terminal and the first network element, and the method further includes:
establishing the third user plane connection with the first network element based on the first indication information.

In some embodiments of the third aspect, the method further includes:
sending a fifth message to the first network element via the second network element, wherein the fifth message is configured to notify that the first user plane connection has been released.

In a fourth aspect, embodiments of the present disclosure provide a first network element, including:
a first transceiver module, configured to receive a first message sent by a second network element, and send a second message to a first terminal via the second network element;
wherein, the first message indicates to change a first user plane connection between the first terminal and the first network element;
the second message is configured to notify the first terminal to change the first user plane connection;
wherein, each of the first message and the second message includes first indication information, indicating to change the first user plane connection.

In a fifth aspect, embodiments of the present disclosure provide a second network element, including:
a second transceiver module, configured to send a first message to a first network element, and send a second message from the first network element to a first terminal;
wherein the first message indicates to change a first user plane connection between the first terminal and the first network element; and
the second message is configured to notify the first terminal to change the first user plane connection;
wherein, each of the first message and the second message includes first indication information, indicating to change the first user plane connection.

In a sixth aspect, embodiments of the present disclosure provide a first terminal, including:
a third transceiver module, configured to receive a second message sent by a first network element via a second network element, wherein the second message is configured to notify the first terminal to change a first user plane connection with the first network element;
wherein, the second message includes first indication information, indicating to change the first user plane connection.

In a seventh aspect, embodiments of the present disclosure provide a first network element, including:
one or more processors;
wherein, the first network element is configured to implement the method described in optional implementations of the first aspect.

In an eighth aspect, embodiments of the present disclosure provide a second network element, including:
one or more processors;
wherein, the second network element is configured to implement the method described in optional implementations of the second aspect.

In a ninth aspect, embodiments of the present disclosure provide a first terminal, including:
one or more processors;
wherein, the first terminal is configured to implement the method described in optional implementations of the third aspect.

In a tenth aspect, embodiments of the present disclosure provide a communication system, including a first terminal, a first network element and a second network element, wherein
the first network element is configured to receive a first message sent by the second network element, the first message indicates to change a first user plane connection between the first terminal and the first network element;
the first network element is configured to send a second message to the first terminal via the second network element, the second message is configured to notify the first terminal to change the first user plane connection;
wherein, each of the first message and the second message includes first indication information, indicating to change the first user plane connection.

In some embodiments of the tenth aspect, the first message includes at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
   and/or,
the second message includes at least one of:
   an identity (ID) of the first network element;
   a correlation ID corresponding to the first network element;
   an IP address of the first network element;
   first indication information, indicating to change the first user plane connection;
   second indication information, indicating to release the first user plane connection; or
   third indication information, indicating a condition for releasing the first user plane connection.

In some embodiments of the tenth aspect, the communication system further includes a third network element, and the first indication information indicates to establish a second user plane connection between the first terminal and the third network element;
the second network element is further configured to forward a third message from the first terminal to the third network element, the third message is configured to request to establish the second user plane connection with the third network element.

In some embodiments of the tenth aspect, the second network element is further configured to forward a fourth message from the third network element to the first terminal, the fourth message is a response message to the third message.

In some embodiments of the tenth aspect, the first message further includes at least one of:
an ID of the third network element;
a correlation ID corresponding to the third network element; or
an IP address of the third network element;
   and/or,
the second message further includes at least one of:
   an ID of the third network element;
   a correlation ID corresponding to the third network element; or
   an IP address of the third network element.

In some embodiments of the tenth aspect, the first indication information indicates to establish a third user plane connection between the first terminal and the first network element;
the first terminal is further configured to establish a third user plane connection with the first network element based on the first indication information.

In some embodiments of the tenth aspect, the first network element is further configured to receive a fifth message forwarded by the second network element from the first terminal, the fifth message is configured to notify that the first user plane connection has been released.

In some embodiments of the tenth aspect, the first network element is further configured to send a sixth message to the second network element, the sixth message is configured to notify the second network element that the first user plane connection has been changed.

In some embodiments of the tenth aspect, the first network element is further configured to send a seventh message to the third network element, the seventh message is configured to transmit context information of the first terminal.

In some embodiments of the tenth aspect, the third message includes at least one of:
a correlation ID corresponding to the first network element; or
a correlation ID corresponding to the third network element.

In some embodiments of the tenth aspect, the fourth message includes at least one of:
a correlation ID corresponding to the first network element; or
a correlation ID corresponding to the third network element.

In some embodiments of the tenth aspect, the fifth message includes a correlation ID corresponding to the first network element.

In some embodiments of the tenth aspect, the sixth message includes a correlation ID corresponding to the first network element.

In some embodiments of the tenth aspect, the first terminal is further configured to keep a protocol data unit (PDU) session after releasing the first user plane connection.

In some embodiments of the tenth aspect, the first network element is further configured to send an eighth message to the second network element before receiving the first message sent by the second network element, the eighth message indicates to change the first user plane connection.

In some embodiments of the tenth aspect, the eighth message includes at least one of:
an ID of the first network element;
a correlation ID corresponding to the first network element;
an IP address of the first network element;
an ID of the third network element;
a correlation ID corresponding to the third network element;
an IP address of the third network element;
first indication information, indicating to change the first user plane connection;
second indication information, indicating to release the first user plane connection; or
third indication information, indicating a condition for releasing the first user plane connection.

In an eleventh aspect, embodiments of the present disclosure provide a storage medium storing instructions that, when executed on a communication device, cause the communication device to perform the method described in the optional implementations of the first aspect, or the second aspect, or the third aspect.

In a twelfth aspect, embodiments of the present disclosure provide a program product that, when executed by a communication device, causes the communication device to perform the method described in the optional implementations of the first aspect, or the second aspect, or the third aspect.

In a thirteenth aspect, embodiments of the present disclosure provide a computer program that, when running on a computer, causes the computer to perform the method described in the optional implementations of the first aspect, or the second aspect, or the third aspect.

In a fourteenth aspect, embodiments of the present disclosure provide a chip or a chip system, including a processing circuit, configured to perform the method described in the optional implementations of the first aspect, or the second aspect, or the third aspect.

It may be understood that the communication device, the communication system, the storage medium, the program product, and the computer program are all configured to perform the methods in embodiments of the present disclosure. Therefore, for achievable beneficial effects, reference may be made to the beneficial effects in the corresponding method, which are not repeated here.

Embodiments of the present disclosure provide a communication method, a communication device, a communication system and a storage medium. In some embodiments, terms such as communication method, information processing method, etc. may be used interchangeably, terms such as communication device, information processing device, etc. may be used interchangeable, and terms such as communication system, information processing system, etc. may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, the terms such as "at least one of", "one or more", "a plurality of", "multiple", etc. may be used interchangeably.

In embodiments of the present disclosure, description such as "at least one of A, B, C..." and "A and/or B and/or C...", include the situation where any one of A, B, C... exists alone, as well as any combination of any multiple of A, B, C..., and each situation can exist alone. For example, "at least one of A, B, or C" includes cases where A is alone, B is alone, C is alone, A and B are combined, A and C are combined, B and C are combined, and A and B and C are combined. For example, "A and/or B" includes cases where A is alone, B is alone, and A and B are combined.

In some embodiments, the recordings such as "in a situation, A, in another situation, B" and "in response to a situation, A, in response to another situation, B" may include the following technical solutions depending on the situation: execute A independently of B, that is, A in some embodiments; execute B independently of A, that is, B in some embodiments; selectively executing A and B, that is, select execution from A and B in some embodiments; A and B are both executed, that is, in some embodiments, A and B. When there are more branches such as A, B, C, etc., it is similar to the above.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the device, etc., may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side").

For example, the uplink channel, the downlink channel, etc. may be replaced with the side channel, and the uplink, the downlink, etc. may be replaced with a sidelink.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct link", and "direct link communication" may be interchangeable with each other.

In some embodiments, terms such as 'downlink control information (DCI)', 'downlink (DL) assignment', 'DL DCI', 'uplink (UL) grant', 'UL DCI', etc. may be interchangeable with each other.

In some embodiments, terms such as "physical downlink shared channel (PDSCH)" and "DL data" may be replaced with each other, and terms such as "physical uplink shared channel (PUSCH)" and "UL data" may be replaced with each other.

In some embodiments, the determination or judgment may be made through a value represented by 1 bit (0 or 1), a true false value (Boolean) represented by true or false, or a comparison of numerical values (such as comparison with a predetermined value), but not limited to these.

In some embodiments, "network" can be interpreted as the devices contained within the network (e.g., access network devices, core network devices, etc.).

In some embodiments, the acquisition of data, information, etc. may comply with laws and regulations of the country to which the data is obtained.

In some embodiments, data, information, etc. may be obtained with consent from users.

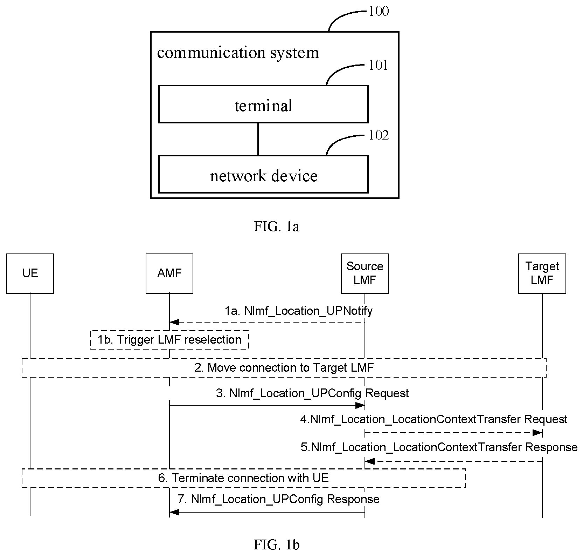

FIG. 1a is a block diagram of a communication system according to an embodiment of the present disclosure.

As shown in FIG. 1a, a communication system 100 includes a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of the access network device or the core network device.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of embodiments of the present disclosure may be applied to the Open-RAN architecture. In this case, the interfaces between or within network devices involved in embodiments of the present disclosure can become internal interfaces of the Open-RAN, and the flow and information exchange between these internal interfaces may be implemented through software or programs.

In some embodiments, the access network device may be composed of a central unit (CU) and distributed units (DUs), where CU may also be described as a control unit. The CU-DU structure may be used to split the protocol layer of the network device, with some protocol layer functions centrally controlled by CU and the remaining or all protocol layer functions distributed in DUs, which are centrally controlled by CU, but not limited to this.

In some embodiments, the access network device may be a device, or may be a plurality of devices or a device group. The network element may be virtual or physical. The network device includes, for example, at least one of an evolved packet core (EPC), a 5G core network (5GCN), or a next generation core (NGC).

In some embodiments, the core network device may be a device, including one or more network elements, or may be a plurality of devices or a device group, each including all or part of the one or more network elements. The network element may be virtual or physical. The core network includes, for example, at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solutions provided in embodiments of the disclosure. A person skilled in the art may know that with the evolution of the system architecture and the emergence of new service scenarios, the technical solution provided in embodiments of the disclosure are also applicable to similar technical problems.

The following embodiments of the present disclosure may be applied to the communication system 100 shown in FIG. 1a, or to some entities, but are not limited thereto. Entities in FIG. 1a are illustrative. The communication system may include all or some of the entities in FIG. 1a, or may include other entities not shown in FIG. 1a. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In some examples, the Location Management Function (LMF) or User Equipment (UE) can trigger the establishment of a user plane connection. UE and LMF can maintain the established user plane connection. In some examples, LMF can modify or terminate the user plane connection established between UE and LMF.

Specifically, in some embodiments, LMF triggers the establishment process of user connection with UE. LMF can send its user plane information (i.e., Internet Protocol (IP) address or Fully Qualified Domain Name (FQDN)) to UE via a downlink Non Access Stratum TRANSPORT (DL NAS TRANSPORT) message of the Access and Mobility Management Function (AMF). If LMF sends its FQDN to UE, a domain name system (DNS) server/resolver is used to resolve the IP address of LMF (e.g. Edge Application Server Discovery Function (EASDF) or local DNS for local LMF address resolution). UE uses UE Route Selection Policy (URSP) which includes user plane positioning related PDU session parameters (e.g. a dedicated data network name (DNN) and Single Network Slice Selection Assistance Information (S-NSSAI)) to establish a protocol data unit (PDU) session used for user plane positioning. Session Management Function (SMF) should select a PDU Session Anchor User Plane Function (PSA UPF) connecting with the LMF for this PDU session, based on S-NSSAI, DNN and UE location information, etc.

In some embodiments, the Identity (ID) includes a routing ID and a correlation ID. The correlation ID and routing ID are different terms for the same identifier. The term 'correlation ID' is used for an identifier in service operations between an AMF and LMF while the term "routing ID" is used for an identifier in a NAS message sent over the N1 reference point between a UE and AMF.

In LCS related procedures, correlation ID (or routing ID) is used between LMF, AMF and UE to identify an LMF and an LCS session between LMF and UE, e.g., when AMF receives the message and routing ID from UE, AMF can map the routing ID to correlation ID, and will send the message to the LMF identified by the correlation ID.

In other embodiments, the user plane connection between UE and LMF may be modified. FIG. 1b shows a schematic diagram of the process of modifying the user plane connection between UE and LMF. The flow describes change of LMF but applies also when source and target LMF is the same. The procedure can also be used to terminate the user plane connection to Source LMF not selecting any Target LMF.

As shown in FIG. 1b, the flow may include the following steps.

1a. The source LMF determines to change the source LMF to the target LMF or re-establish the user plane connection between UE and the source LMF or terminate the user plane connection between UE and the source LMF. The source LMF sends an Nlmf_Location_UPNotify message to AMF. If it is determined to change the source LMF to the target LMF, the message may further include the target LMF identification.

1b. AMF based on target LMF identification received from the source LMF, performs LMF reselection; or AMF may perform LMF reselection if UE moves to a new location (which may be out of serving area of source LMF and in serving area of target LMF).

Specifically, AMF may select the target LMF for the current UE location based on LMF service area and LMF user plane positioning capability information. The selected target LMF needs to be capable to establish a user plane session for positioning with the UE.

2. If AMF reallocation has occurred, this step is skipped. Otherwise, the following steps 3-8 are performed between AMF, UE, and Target LMF with addition that UE also terminates the user plane connection to Source LMF.

3. The AMF sends an Nlmf_Location_UPConfig Request message towards the source LMF. The message may include indication information to release the user plane connection between the source LMF to the UE, and the Target LMF identification.

4-5. The source LMF may invoke an Nlmf_Location_LocationContextTransfer Request service operation towards the target LMF to provide the current location context of the UE, if there is periodic and triggered UE location events report context. The target LMF informs source LMF of the location context transfer operation results.

6. If the user plane connection between UE to source LMF has been established, the source LMF terminates the old user plane connection (also referred to as the original user plane connection) to the UE.

7. The source LMF sends Nlmf_Location_UPConfig Response message to AMF to notify AMF that user plane connection between the source LMF and UE has been released. The AMF will release the LCS-UP context after receiving the response message.

In the case of user plane connection modification, UE and LMF will release the old user plane connection and establish a new user plane connection between LMF (different LMF or the same LMF) and UE. The process of releasing old user plane connections during the modification process may be initiated by the UE or LMF, but if the UE initiates the establishment process of a new user plane connection after releasing the old user plane connection in LMF, the UE cannot obtain information about the target LMF through the existing establishment process of the user plane connection, and therefore cannot establish a new user plane connection with the target LMF.

Therefore, the solution provided in embodiments of the present disclosure provides a user plane connection re-establishment and modification process, wherein the source LMF (also known as the original LMF or the old LMF) can send a re-establishment/modification indication and information of the target LMF (also known as the new LMF) to the UE, and can trigger the UE to release the user plane connection with the old LMF and establish a new user plane connection with the new LMF.

In some embodiments, "obtain", "acquire", "get", "receive", "transmit", "bidirectional transmission", "send and/or receive" may be replaced with each other, which may be interpreted as receiving from other entities, obtaining from protocols, obtaining from higher layers, obtained from self-processing, autonomous implementation, and other meanings.

In the following, based on the aforementioned wireless communication system, various embodiments of the communication method disclosed in this disclosure are described in detail.

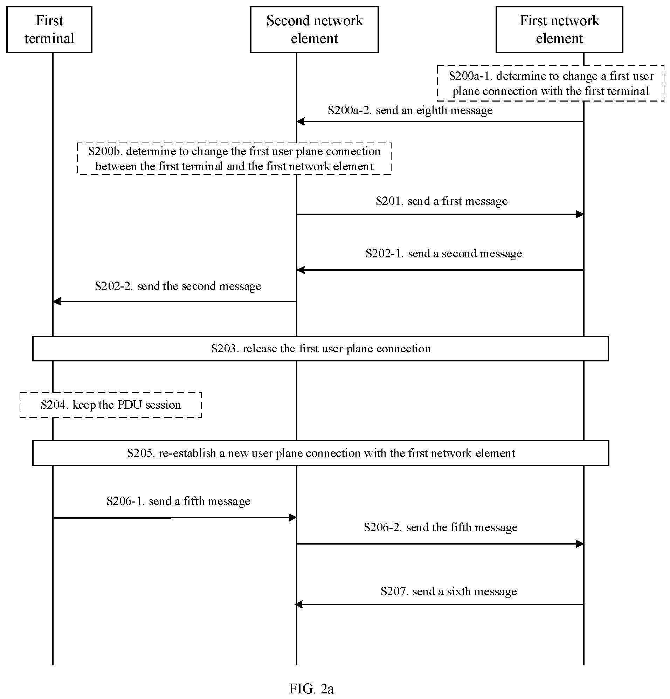

FIG. 2a is a schematic diagram of interaction in a communication method according to an embodiment of the present disclosure. As shown in FIG. 2a, the communication method is applied in the communication system 100. The method includes the following steps.

At S201, a second network element sends a first message to a first network element.

In some embodiments, the first network element may be an LMF, or an SF, or an enhanced LMF.

In some embodiments, the second network element may be an AMF.

In some embodiments, the first message indicates to change a first user plane connection between a first terminal and the first network element.

Optionally, changing the first user plane connection between the first terminal and the first network element includes: releasing the first user plane connection and re-establishing a third user plane connection between the first terminal and the first network element; or, releasing the first user plane connection and establishing a second user plane connection between the first terminal and a third network element.

Optionally, the first message may include first indication information, which indicates to change the first user plane connection between the first terminal and the first network element.

In some embodiments, the first indication information may indicate to re-establish a user plane connection between the first terminal and the first network element, such as a newly established third user plane connection.

In some embodiments, the first message may further include at least one of relevant information of the first network element, second indication information, or third indication information.

Optionally, the relevant information of the first network element may include at least one of an identity (ID) of the first network element, an IP address (e.g. LMF LCS-UP address), or a correlation ID corresponding to the first user plane connection.

Optionally, the correlation ID corresponding to the first user plane connection may also be a correlation ID corresponding to the first network element.

Optionally, the second indication information indicates to release the first user plane connection.

Optionally, the third indication information indicates a condition for releasing the first user plane connection.

As an example, the third indication information indicates that the condition for releasing the first user plane connection is to release the first user plane connection before or after the first terminal and the first network element re-establish a new user plane connection (which may correspond to the third user plane connection mentioned above).

In some embodiments, the condition for releasing the first user plane connection may be determined based on business requirements related to the first user plane connection.

For example, if the service related to the first user plane connection allows network interruption, the condition for releasing the first user plane connection is to release the first user plane connection before the first terminal and the first network element re-establish a new user plane connection. Otherwise, the first user plane connection is released after the first terminal and the first network element re-establish a new user plane connection.

In some embodiments, the first message may be a message related to user plane positioning, such as the LMF User Plane Positioning Configuration Request (Nlmf_Location_UPConfig Request) message, but the name of the message is not limited to this.

In some embodiments, the names of information and the like are not limited to the names described in the embodiments. Terms such as "information", "message", "signal", "signaling", "report", "configuration", "indication", "instruction", "command", "channel", "parameter", "domain", "field", "symbol", "data", etc. may be replaced with each other.

In some embodiments, terms such as 'send', 'transmit', 'report', 'issue', 'emit', 'bidirectional transmission', 'send and/or receive' may be interchangeable with each other.

At S202, the first network element sends a second message to the first terminal via the second network element.

In some embodiments, the second message is configured to notify the first terminal to change the first user plane connection with the first network element.

Optionally, the second message may include first indication information to indicate the first terminal to change the first user plane connection with the first network element.

In some embodiments, the first indication information may indicate the first terminal to re-establish a new user plane connection with the first network element.

In some embodiments, the second message may further include at least one of relevant information of the first network element, second indication information, or third indication information.

In some embodiments, at least one of the relevant information of the first network element, the second indication information, or the third indication information may be transmitted together with the second message to the first terminal via the second network element.

Optionally, the relevant information of the first network element may include at least one of an ID of the first network element, an IP address (e.g. LMF LCS-UP address), and a correlation ID corresponding to the first user plane connection.

Optionally, the second indication information indicates to release the first user plane connection.

Optional, the third indication information indicates a condition for releasing the first user plane connection.

As an example, the third indication information indicates that the condition for releasing the first user plane connection is to release the first user plane connection before or after the first terminal and the first network element re-establish a new user plane connection.

In some embodiments, the second message may be a user plane connection release command message, but the name of the message is not limited to this.

In some embodiments, the second message may be a user plane connection re-establishment command message, but the name of the message is not limited to this.

In some embodiments, the second message may be a user plane connection modification command message, but the name of the message is not limited to this.

In some embodiments, S202 includes S202-1, where the first network element sends the second message to the second network element.

Optionally, the second message sent by the first network element to the second network element, such as the user plane connection release command message, may be carried through the Namf_Communication_N1N2MessageTransfer message.

In some embodiments, S202 includes S202-2, where the second network element sends the second message to the first terminal.

Optionally, the second message sent by the second network element to the first terminal, such as the user plane connection release command message, may be carried through the downlink non-access stratum transport (DL NAS TRANSPROT) message.

In some embodiments, the second network element may convert the correlation ID to a routing ID.

At S203, the first terminal releases the user plane connection with the first network element according to the second message.

In some embodiments, the first terminal may release the user plane connection with the first network element according to at least one of the first indication information, the second indication information or the third indication information in the second message.

At S204, the first terminal keeps a protocol data unit (PDU) session.

In some embodiments, even if the old user plane connection with the first network element is released based on the second message and there are no other active user plane connections, the first terminal still maintains or keeps the PDU session without releasing it, in order to provide a basis for re-establishing a new user plane connection and shorten the delay in establishing the user plane connection.

At S205, the first terminal re-establishes the user plane connection with the first network element according to the first indication information.

At S206, the first terminal sends a fifth message to the first network element via the second network element.

In some embodiments, the fifth message is configured to notify that the first user plane connection has been released.

In some embodiments, the fifth message may be a user plane connection release complete message, but the name of the message is not limited to this.

In some embodiments, the fifth message may be a user plane connection re-establishment complete message, but the name of the message is not limited to this.

In some embodiments, the fifth message may be a user plane connection modification complete message, but the name of the message is not limited to this.

In some embodiments, S206 includes S206-1, where the first terminal sends the fifth message to the second network element.

Optionally, the fifth message sent by the first terminal to the second network element may be carried through an uplink non access stratum transport (UL NAS TRANSPROT) message.

In some embodiments, the fifth message sent by the first terminal to the second network element includes a routing ID.

In some embodiments, the second network element may convert the routing ID into a correlation ID.

In some embodiments, S206 includes S206-2, where the second network element sends the fifth message to the first network element.

Optionally, the fifth message sent by the second network element to the first network element may be carried through the Namf_Communication_N1MessageNotify message.

In some embodiments, the fifth message sent by the second network element to the first network element includes the correlation ID.

At S207, the first network element sends a sixth message to the second network element.

In some embodiments, the sixth message is configured to notify the second network element that the user plane connection between the first network element and the first terminal has been re-established.

In some embodiments, the sixth message may be a message related to user plane positioning, such as the LMF User Plane Positioning Configuration Response (Nlmf_Location _UPConfig Response) message, but the name of the message is not limited to this.

In some embodiments, before S201, the following steps may also be included:
S200a-1, the first network element determines to re-establish the user plane connection with the first terminal.
S200a-2, the first network element sends an eighth message to the second network element.

In some embodiments, the eighth message indicates to change the user plane connection with the first terminal.

In some embodiments, the eighth message may include at least one of the following:
first indication information, indicating to change the first user plane connection between the first terminal and the first network element;
relevant information of the first network element;
second indication information, indicating to release the first user plane connection; or
third indication information, indicating the condition for releasing the first user plane connection.

In some embodiments, the eighth message may be a message related to user plane positioning, such as the LMF User Plane Positioning Notification (Nlmf_Location_UPNotify) message, but the name of the message is not limited to this.

In some embodiments, if the performance of the old user plane connection between the first terminal and the first network element deteriorates and cannot meet the relevant business requirements, the first network element may determine to re-establish the user plane connection between the first terminal and the first network element.

In some embodiments, before S201, it is also possible to perform the following operation:
S200b, the second network element determines to re-establish the user plane connection between the first network element and the first terminal.

In some embodiments, the second network element may select a target network element, such as the first network element, to establish a user plane connection with the first terminal based on the LMF service area and LMF user plane positioning capability information.

In some embodiments, if the performance of the old user plane connection between the first terminal and the first network element deteriorates and cannot meet the relevant business requirements, the second network element may determine to re-establish the user plane connection between the first terminal and the first network element.

In embodiments of the present disclosure, by carrying indication information indicating to change the user plane connection between the first terminal and the first network element in the first message between the first network element and the second network element, as well as in the second message between the second network element and the first terminal, it is possible to establish a new user plane connection even after the old user plane connection is released.

The method involved in embodiments of the present disclosure may include at least one of steps S200a-1-S207. For example, steps S201 and S202 may be implemented as an independent embodiment, steps S201, S202 and S203 may be implemented as an independent embodiment, steps S201, S202, S203 and S205 may be implemented as an independent embodiment, steps S201, S202, S203, S204 and S205 may be implemented as an independent embodiment, steps S201, S202, S203, S205 and S206 may be implemented as an independent embodiment, steps S201, S202, S203, S204, S205 and S206 may be implemented as an independent embodiment, steps S201, S202, S203, S205 and S207 may be implemented as an independent embodiment, steps S201, S202, S203, S205, S206 and S207 may be implemented as an independent embodiment, and steps S201, S202, S203, S204, S205, S206 and S207 may be implemented as an independent embodiment, but not limited to these.

In some embodiments, steps S200a-1 and S200a-2 are optional and may be combined with the above-mentioned independent embodiments. In different embodiments, one or more of these steps may be omitted or replaced.

In some embodiments, step S200b is optional and may be combined with the above-mentioned independent embodiments. In different embodiments, one or more of these steps may be omitted or replaced.

In some embodiments, step S204 is optional, and one or more of these steps may be omitted or replaced in different embodiments.

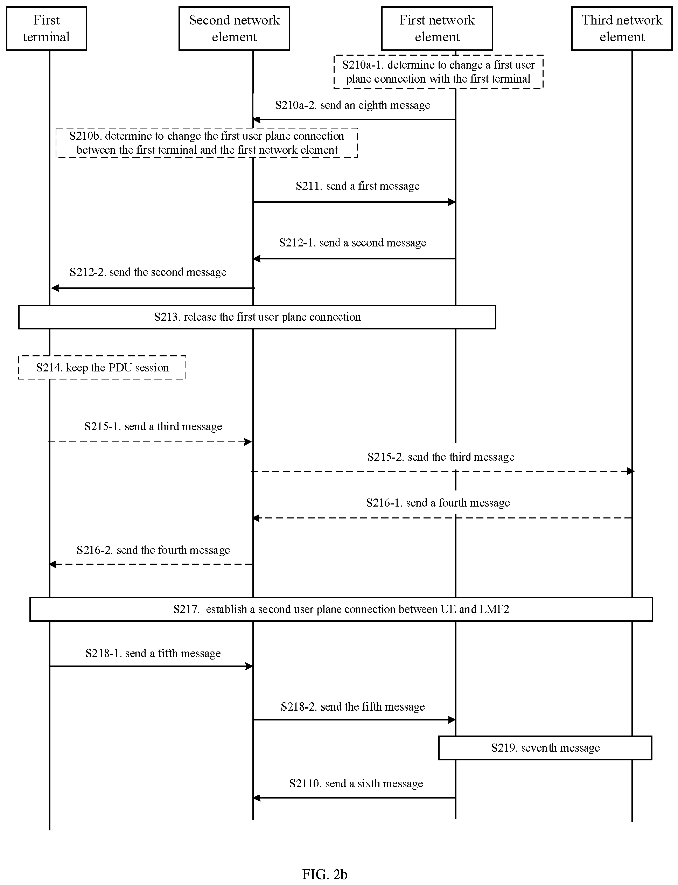

FIG. 2b is a schematic diagram of interaction in a communication method according to an embodiment of the present disclosure. As shown in FIG. 2b, the communication method is applied in the communication system 100. The method includes the following steps.

At S211, a second network element sends a first message to a first network element.

In some embodiments, the first network element may be an LMF, or an SF, or an enhanced LMF.

In some embodiments, the second network element may be an AMF.

In some embodiments, the first message indicates to change a first user plane connection between a first terminal and the first network element.

Optionally, the first message may include first indication information, which indicates to change the first user plane connection between the first terminal and the first network element.

In some embodiments, the first indication information may indicate to establish a second user plane connection between the first terminal and a third network element.

In some embodiments, the first message may further include at least one of relevant information of the first network element, second indication information, third indication information or relevant information of the third network element.

Optionally, the relevant information of the first network element may include at least one of an identity (ID) of the first network element, an IP address (e.g. LMF LCS-UP address), or a correlation ID corresponding to the first user plane connection.

Optionally, the relevant information of the third network element may include at least one of an identity (ID) of the third network element, an IP address (e.g. LMF LCS-UP address), or a correlation ID corresponding to the second user plane connection.

Optionally, the correlation ID corresponding to the second user plane connection may also be a correlation ID corresponding to the third network element.

Optionally, the second indication information indicates to release the first user plane connection.

Optionally, the third indication information indicates a condition for releasing the first user plane connection.

As an example, the third indication information indicates that the condition for releasing the first user plane connection is to release the first user plane connection before or after the first terminal and the third network element establish the second user plane connection.

In some embodiments, the condition for releasing the first user plane connection may be determined based on business requirements related to the first user plane connection.

For example, if the service related to the first user plane connection allows network interruption, the condition for releasing the first user plane connection is to release the first user plane connection before the first terminal and the third network element establish a new user plane connection. Otherwise, the first user plane connection is released after the first terminal and the third network element establish a new user plane connection.

In some embodiments, the first message may be a message related to user plane positioning, such as the LMF User Plane Positioning Configuration Request (Nlmf_Location_UPConfig Request) message, but the name of the message is not limited to this.

In some embodiments, the names of information and the like are not limited to the names described in the embodiments. Terms such as "information", "message", "signal", "signaling", "report", "configuration", "indication", "instruction", "command", "channel", "parameter", "domain", "field", "symbol", "data", etc. may be replaced with each other.

In some embodiments, terms such as 'send', 'transmit', 'report', 'issue', 'emit', 'bidirectional transmission', 'send and/or receive' may be interchangeable with each other.

At S212, the first network element sends a second message to the first terminal via the second network element.

In some embodiments, the second message is configured to notify the first terminal to change the first user plane connection with the first network element. Optionally, the second message may include first indication information to indicate the first terminal to change the first user plane connection with the first network element.

In some embodiments, the first indication information may indicate the first terminal to establish a second user plane connection with the third network element.

In some embodiments, the second message may further include at least one of relevant information of the first network element, second indication information, third indication information, or relevant information of the third network element.

In some embodiments, at least one of the relevant information of the first network element, the second indication information, or the third indication information may be transmitted together with the second message to the first terminal via the second network element.

Optionally, the relevant information of the first network element may include at least one of an ID of the first network element, or a correlation ID corresponding to the first user plane connection.

Optionally, the relevant information of the third network element may include at least one of an ID of the third network element, an LMF LCS-UP address, or a correlation ID corresponding to the second user plane connection.

Optionally, the second indication information indicates to release the first user plane connection.

Optional, the third indication information indicates a condition for releasing the first user plane connection.

As an example, the third indication information indicates that the condition for releasing the first user plane connection is to release the first user plane connection before or after the first terminal and the third network element establish the second user plane connection.

In some embodiments, the second message may be a user plane connection release command message, but the name of the message is not limited to this.

In some embodiments, the second message may be a user plane connection re-establishment command message, but the name of the message is not limited to this.

In some embodiments, the second message may be a user plane connection modification command message, but the name of the message is not limited to this.

In some embodiments, S212 includes S212-1, where the first network element sends the second message to the second network element.

Optionally, the second message sent by the first network element to the second network element, such as the user plane connection release command message, may be carried through the Namf_Communication_N1N2MessageTransfer message.

In some embodiments, S212 includes S212-2, where the second network element sends the second message to the first terminal.

Optionally, the second message sent by the second network element to the first terminal, such as the user plane connection release command message, may be carried through the downlink non-access stratum transport (DL NAS TRANSPROT) message.

In some embodiments, the second network element may convert the correlation ID (e.g., correlation ID1) corresponding to the first user plane connection into the routing ID (e.g., routing ID1) corresponding to the first user plane connection, and convert the correlation ID (e.g., correlation ID2) corresponding to the second user plane connection into the routing ID (e.g., routing ID2) corresponding to the second user plane connection.

At S213, the first terminal releases the user plane connection with the first network element according to the second message.

In some embodiments, the first terminal may release the user plane connection with the first network element according to at least one of the first indication information, the second indication information or the third indication information in the second message.

At S214, the first terminal keeps a protocol data unit (PDU) session.

In some embodiments, even if the old user plane connection with the first network element is released based on the second message and there are no other active user plane connections, the first terminal still maintains or keeps the PDU session without releasing it, in order to provide a basis for re-establishing a new user plane connection and shorten the delay in establishing the user plane connection.

At S215, the first terminal sends a third message to the third network element via the second network element.

In some embodiments, the third message is configured to request to establish the second user plane connection with the third network element.

In some embodiments, the third message may be a user plane connection establishment request message, but the name of the message is not limited to this.

In some embodiments, S215 includes S215-1, where the first terminal sends the third message to the second network element.

Optionally, the third message sent by the first terminal to the second network element may be carried through an uplink non access stratum transport (UL NAS TRANSPROT) message.

In some embodiments, the third message sent by the first terminal to the second network element includes a routing ID2 corresponding to the second user plane connection.

In some embodiments, the second network element may convert the routing ID2 into a correlation ID2.

In some embodiments, S215 includes S215-2, where the second network element sends the third message to the third network element.

Optionally, the third message sent by the second network element to the third network element may be carried through the Namf_Communication_N1MessageNotify message.

In some embodiments, the third message sent by the second network element to the third network element includes the correlation ID2.

At S216, the third network element sends a fourth message to the first terminal via the second network element.

In some embodiments, the fourth message is configured to notify the first terminal whether establishing the second user plane connection is allowed.

In some embodiments, the fourth message is a response message to the third message, such as a user plane connection establishment response message, but the name of the message is not limited to this.

In some embodiments, step S216 includes S216-1, where the third network element sends the fourth message to the second network element.

Optionally, the fourth message sent from the third network element to the second network element may be carried through the Namf_Communication_N1N2MessageTransfer message.

In some embodiments, the fourth message sent by the third network element to the second network element includes the correlation ID2.

In some embodiments, the second network element may convert the correlation ID2 into the routing ID2.

In some embodiments, step S216 includes S216-2, where the second network element sends the fourth message to the first terminal.

Optionally, the fourth message sent by the second network element to the first terminal may be carried through the DL NAS TRANSPROT message.

In some embodiments, the fourth message sent by the second network element to the first terminal includes the routing ID2.

At S217, the first terminal establishes the second user plane connection with the third network element according to the fourth message.

In some embodiments, if the fourth message received by the first terminal carries indication information of whether to establish the second user plane connection with the first terminal, the first terminal establishes the second user plane connection with the third network element.

At S218, the first terminal sends a fifth message to the first network element via the second network element.

In some embodiments, the fifth message is configured to notify that the first user plane connection has been released.

In some embodiments, the fifth message may be a user plane connection re-establishment complete message, but the name of the message is not limited to this.

In some embodiments, the fifth message may be a user plane connection release complete message, but the name of the message is not limited to this.

In some embodiments, the fifth message may be a user plane connection modification complete message, but the name of the message is not limited to this.

In some embodiments, S218 includes S218-1, where the first terminal sends the fifth message to the second network element.

Optionally, the fifth message sent by the first terminal to the second network element may be carried through an uplink non access stratum transport (UL NAS TRANSPROT) message.

In some embodiments, the fifth message sent by the first terminal to the second network element includes a routing ID1.

In some embodiments, the second network element may convert the routing ID1 into a correlation ID1.

In some embodiments, S218 includes S218-2, where the second network element sends the fifth message to the first network element.

Optionally, the fifth message sent by the second network element to the first network element may be carried through the Namf_Communication_N1MessageNotify message.

In some embodiments, the fifth message sent by the second network element to the first network element includes the correlation ID1.

At S219, the first network element sends a seventh message to the third network element.

Optionally, the seventh message is configured to transmit context information of the first terminal.

In some embodiments, the seventh message may be an Nlmf_Location_LocationContextTransfer Request message, but the name of the message is not limited to this.

In some embodiments, the first network element may also receive a response message to the seventh message sent by the third network element, such as the Nlmf_Location_LocationContextTransfer Response message, but the name of the message is not limited to this.

At S2110, the first network element sends a sixth message to the second network element.

In some embodiments, the sixth message is configured to notify the second network element that the user plane connection between the first terminal and the second network element has changed, or to notify the second network element that the user plane connection between the first terminal and the first network element has been released.

In some embodiments, the sixth message may be a message related to user plane positioning, such as the LMF User Plane Positioning Configuration Response (Nlmf_Location_UPConfig Response) message, but the name of the message is not limited to this.

In some embodiments, before step S211, the following steps may also be included:
S210a-1, the first network element determines to change the user plane connection with the first terminal.

Optionally, the first network element determines to release the first user plane connection with the first terminal.

Optionally, the first network element determines to release the first user plane connection with the first terminal and determines to establish a second user plane connection between the first terminal and the third network element.

S210a-2, the first network element sends an eighth message to the second network element.

In some embodiments, the eighth message indicates to change the user plane connection with the first terminal.

In some embodiments, the eighth message may include at least one of the following:
first indication information, indicating to change the first user plane connection between the first terminal and the first network element;
relevant information of the first network element;
relevant information of the third network element;
second indication information, indicating to release the first user plane connection; or
third indication information, indicating the condition for releasing the first user plane connection.

Optionally, the first indication information is configure to indicate to establish the second user plane connection between the first terminal and the third network element.

In some embodiments, the eighth message may be a message related to user plane positioning, such as the LMF User Plane Positioning Notification (Nlmf_Location_UPNotify) message, but the name of the message is not limited to this.

In some embodiments, before S211, the following operation may be performed.

S210b, the second network element determines to change the user plane connection between the first network element and the first terminal.

Optionally, the second network element determines to release the first user plane connection with the first terminal.

Optionally, the second network element determines to release the first user plane connection with the first terminal, and determines to establish the second user plane connection between the first terminal and the third network element.

In some embodiments, the second network element may select a target network element, such as the first network element, to establish a user plane connection with the first terminal based on the LMF service area and LMF user plane positioning capability information.

In the above embodiments, if the performance of the old user plane connection between the first terminal and the first network element deteriorates and cannot meet the relevant business requirements, the first network element or the second network element may determine to establish the user plane connection between the first terminal and the third network element.

The method involved in embodiments of the present disclosure may include at least one of steps S210a-1-S2110. For example, steps S211 and S212 may be implemented as an independent embodiment, steps S211, S212 and S213 may be implemented as an independent embodiment, steps S211, S212, S213, S215, S216 and S217 may be implemented as an independent embodiment, steps S211, S212, S213, S215, S216, S217 and S218 may be implemented as an independent embodiment, steps S211-S218 may be implemented as an independent embodiment, steps S211, S212, S213, S215, S216, S217, S218 and S219 may be implemented as an independent embodiment, steps S211-S219 may be implemented as an independent embodiment, steps S211, S212, S213, S215, S216, S217, S218, S219 and S2110 may be implemented as an independent embodiment, and steps S211-S2110 may be implemented as an independent embodiment, but not limited to these.

In some embodiments, steps S210a-1 and S210a-2 are optional and may be combined with the above-mentioned independent embodiments. In different embodiments, one or more of these steps may be omitted or replaced.

In some embodiments, step S210b is optional and may be combined with the above-mentioned independent embodiments. In different embodiments, one or more of these steps may be omitted or replaced.

In some embodiments, step S214 is optional, and one or more of these steps may be omitted or replaced in different embodiments.

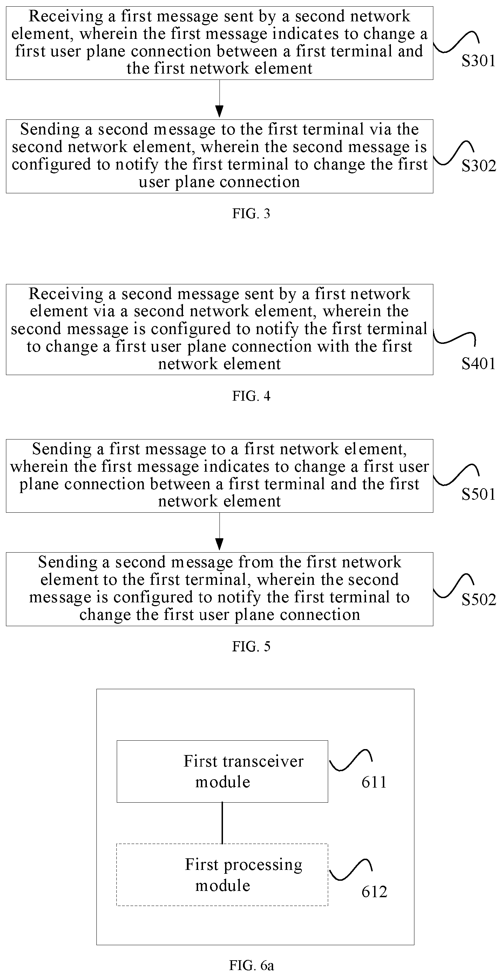

FIG. 3 is a schematic flowchart of a communication method according to an embodiment of the present disclosure. As shown in FIG. 3, the communication method may be performed by a first network element and includes:
S301, a first message sent by a second network element is received, wherein the first message indicates to change a first user plane connection between a first terminal and the first network element; and
S302, sending a second message to the first terminal via the second network element, wherein the second message is configured to notify the first terminal to change the first user plane connection.

In some embodiments, the first message includes at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
   and/or,
the second message includes at least one of:
   an ID of the first network element;
   a correlation ID corresponding to the first network element;
   an IP address of the first network element;
   first indication information, indicating to change the first user plane connection;
   second indication information, indicating to release the first user plane connection; or
   third indication information, indicating a condition for releasing the first user plane connection.

In some embodiments, the method may further include:
receiving a fifth message sent by the first terminal via the second network element, wherein the fifth message is configured to notify that the first user plane connection has been released.

In some embodiments, the fifth message includes a correlation ID corresponding to the first network element.

In some embodiments, the method may further include:
sending a sixth message to the second network element, wherein the sixth message is configured to notify that the first user plane connection has been changed.

In some embodiments, the sixth message includes the correlation ID corresponding to the first network element.

In some embodiments, the first indication information indicates to establish a second user plane connection between the first terminal and a third network element, and the method further includes:
sending a seventh message to the third network element, wherein the seventh message is configured to transmit context information of the first terminal.

In some embodiments, the first indication information indicates to establish a third user plane connection between the first terminal and the first network element.

In some embodiments, before receiving the first message sent by the second network element, the method further includes:
sending an eighth message to the second network element, wherein the eighth message indicates to change the first user plane connection.

In some embodiments, the eighth message includes at least one of:
an ID of the first network element;
a correlation ID corresponding to the first network element;
an IP address of the first network element;
an ID of the third network element;
a correlation ID corresponding to the third network element;
an IP address of the third network element;
first indication information, indicating to change the first user plane connection;
second indication information, indicating to release the first user plane connection; or
third indication information, indicating a condition for releasing the first user plane connection.

FIG. 4 is a schematic flowchart of a communication method according to an embodiment of the present disclosure. As shown in FIG. 4, the communication method may be performed by a first terminal, and includes:
S401, receiving a second message sent by a first network element via a second network element, wherein the second message is configured to notify the first terminal to change a first user plane connection with the first network element.

In some embodiments, the second message includes at least one of:
an ID of the first network element;
a correlation ID corresponding to the first network element;
an IP address of the first network element;
an ID of the third network element;
a correlation ID corresponding to the third network element;
an IP address of the third network element;
first indication information, indicating to change the first user plane connection;
second indication information, indicating to release the first user plane connection; or
third indication information, indicating a condition for releasing the first user plane connection.

In some embodiments, the method further includes: releasing the first user plane connection based on the second message.

In some embodiments, before releasing the first user plane connection, the method further includes: keeping a PDU session.

Optionally, the PDU session is kept in the case of no other active user plane connections.

In some embodiments, the first indication information indicates to establish a second user plane connection between the first terminal and a third network element, and the method further includes:
sending a third message to the third network element via the second network element, wherein the third message is configured to request to establish the second user plane connection with the third network element.

In some embodiments, the third message includes at least one of:
a correlation ID corresponding to the first network element; or
a correlation ID corresponding to the third network element.

In some embodiments, the method further includes:
receiving a fourth message sent by the third network element via the second network element, wherein the fourth message is a response message to the third message.

Optionally, the first terminal may establish the second user plane connection based on the fourth message.

In some embodiments, the fourth message includes at least one of:
a correlation ID corresponding to the first network element; or
a correlation ID corresponding to the third network element.

In some embodiments, the first indication information indicates to establish a third user plane connection between the first terminal and the first network element, and the method further includes: establishing the third user plane connection with the first network element based on the first indication information.

In some embodiments, the method further includes:
sending a fifth message to the first network element via the second network element, wherein the fifth message is configured to notify that the first user plane connection has been released.

FIG. 5 is a schematic flowchart of a communication method according to an embodiment of the present disclosure. As shown in FIG. 5, the communication method may be performed by a second network element, including:
sending a first message to a first network element, wherein the first message indicates to change a first user plane connection between a first terminal and the first network element; and
sending a second message from the first network element to the first terminal, wherein the second message is configured to notify the first terminal to change the first user plane connection.

In some embodiments, the first message includes at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
   and/or,
   the second message includes at least one of:
   an identity (ID) of the first network element;
   a correlation ID corresponding to the first network element;
   an IP address of the first network element;
   first indication information, indicating to change the first user plane connection;
   second indication information, indicating to release the first user plane connection; or
   third indication information, indicating a condition for releasing the first user plane connection.

In some embodiments, the method further includes:
receiving a sixth message sent by the first network element, wherein the sixth message is configured to notify the second network element that the first user plane connection has been changed. D

In some embodiments, before sending the first message to the first network element, the method further includes:
receiving an eighth message sent by the first network element, wherein the eighth message indicates to change the first user plane connection.

FIG. 6a is a block diagram of a first network element according to an embodiment of the present disclosure. As shown in FIG. 6a, the first network element may include at least one of a first transceiver module 611 or a first processing module 612.

In some embodiments, the first transceiver module 611 is configured to receive a first message sent by a second network element, and send a second message to a first terminal via the second network element;
wherein, the first message indicates to change a first user plane connection between the first terminal and the first network element;
the second message is configured to notify the first terminal to change the first user plane connection.

Optionally, the first transceiver module 611 is configured to perform steps related to transmitting and receiving signaling, executed by the first network element in any of the aforementioned methods, for example, at least one of steps S200a-2, S201, S202-1, S206-2, S207 shown in FIG. 2a, or steps S210a-2, S211, S212-1, S218-2, S219, S2110 shown in FIG. 2b, which will not be repeated here.

Optionally, the first processing module 612 is configured to perform steps related to determining to change a user plane connection, as executed by the first network element in any of the aforementioned methods, for example, at least one of step S200a-1 shown in FIG. 2a or step S210a-1 shown in FIG. 2b, which will not be repeated here.

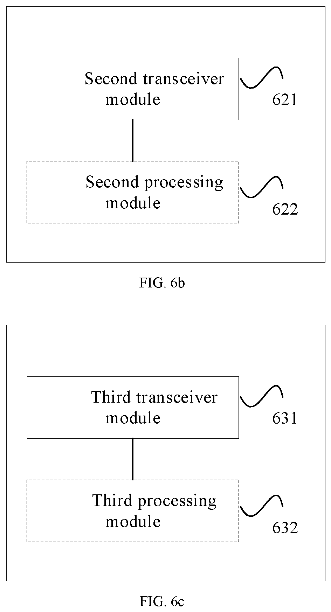

FIG. 6b is a block diagram of a second network element according to an embodiment of the present disclosure. As shown in FIG. 6b, the second network element includes at least one of a second transceiver module 621 or a second processing module 622.

In some embodiments, the second transceiver module 621 is configured to send a first message to a first network element, and send a second message from the first network element to a first terminal;
wherein, the first message indicates to change a first user plane connection between the first terminal and the first network element;
the second message is configured to notify the first terminal to change the first user plane connection.

Optionally, the second transceiver module 621 is configured to perform steps related to transmitting and receiving signaling, executed by the second network element in any of the aforementioned methods, for example, at least one of steps S200a-2, S201, S202, S206, S207 shown in FIG. 2a, or steps S210a-2, S211, S212, S215, S216, S218, S219, S2110 shown in FIG. 2b, which will not be repeated here.

Optionally, the second processing module 622 is configured to perform steps related to determining to change a user plane connection, as executed by the second network element in any of the aforementioned methods, for example, at least one of step S200b shown in FIG. 2a or step S210b shown in FIG. 2b, which will not be repeated here.

FIG. 6c is a block diagram of a first terminal according to an embodiment of the present disclosure. As shown in FIG. 6c, the first terminal may include at least one of a third transceiver module 631 or a third processing module 632.

In some embodiments, the third transceiver module 631 is configured to receive a second message sent by a first network element via a second network element, wherein the second message is configured to notify the first terminal to change a first user plane connection with the first network element.

Optionally, the third transceiver module 631 is configured to perform steps related to transmitting and receiving signaling, executed by the first terminal in any of the aforementioned methods, for example, at least one of steps S202-2, S206-1 shown in FIG. 2a, or steps S212-2, S215-1, S216-1, S218-1 shown in FIG. 2b, which will not be repeated here.

Optionally, the third processing module 632 is configured to perform steps related to determining to change a user plane connection, as executed by the first terminal in any of the aforementioned methods, for example, at least one of steps S203, S204, S205 shown in FIG. 2a or steps S213, S214, S217 shown in FIG. 2b, which will not be repeated here.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules.

All units or modules of the above apparatus may be fully implemented in the form of software called by the processor, or fully implemented in the form of the hardware circuit, or partially implemented in the form of software called by the processor and the remaining part implemented in the form of the hardware circuit. In embodiments of the present disclosure, the processor is a circuit with a signal processing capability. In an implementation, the processor may be a circuit configured to read and execute instructions. Examples the circuit include a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

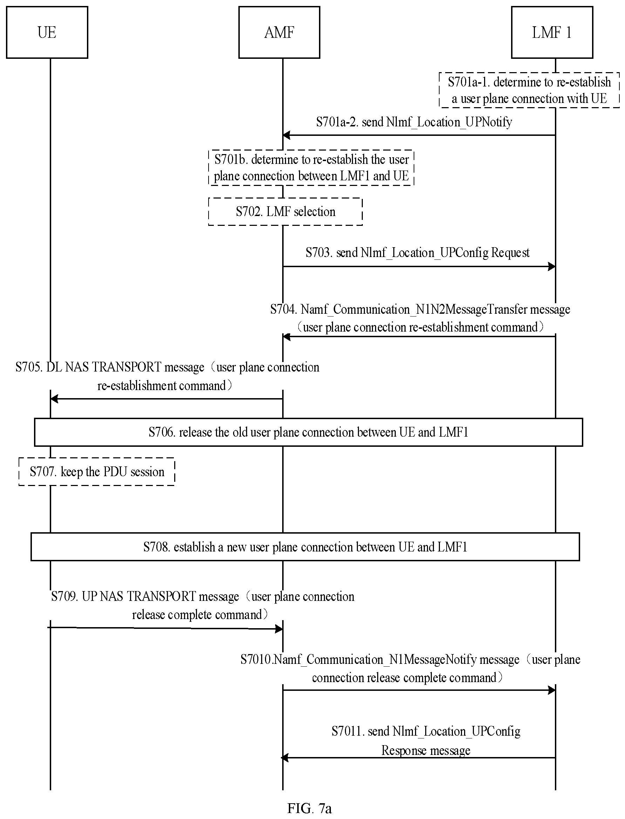

This disclosure also provides an optional implementation to determine re-establishment of the user plane connection between the first terminal (UE) and the first network element (LMF1). As shown in FIG. 7a, the process may include the following steps.

At S701a-1, LMF1 (which may be corresponding to the first network element above) discovers a need to re-establish the user plane connection between UE and this LMF1 or terminate the user plane connection.

Optionally, LMF1 may determine to release the old user plane connection before establishing a new user plane connection, or release the old user plane connection after establishing a new user plane connection.

At S701a-2, LMF1 sends a Nlmf_Location_UPNotify message (which may be corresponding to the eighth message above) to AMF (which may be corresponding to the second network element above).

The message may include re-establish indication information (which may be corresponding to the first indication information mentioned above) indicating the user plane connection move (termination of old connection and establishment of new connection), indicating the UE to re-establish the user plane connection with LMF1, or indicating the UE to establish a new user plane connection with LMF1.

Optionally, the message may also include at least one of the correlation ID 1 or the ID of LFM1 (e.g. LFM ID1).

Optionally, the message may also include release indication information (which may also described as termination indication information, corresponding to the second indication information mentioned above), used to indicate the UE to release the original user plane connection (old user plane connection) with LMF1.

Optionally, the message may also include indication information (which may correspond to the third indication information mentioned above) indicating to release the old user plane connection before establishing the new user plane connection, or indicating to release the old user plane connection after establishing the new user plane connection.

At S701b, AMF discovers a need to re-establish the user plane connection between UE and LMF1.

At S702, AMF may select the target LMF for the current UE location as LMF1 (which may be described as the source LMF), based on LMF service area, LMF user plane positioning capability information.

Optionally, AMF may determine to release the old user plane connection before establishing the new user plane connection or release the olde user plane connection after establishing the new user plane connection.

Optionally, AMF may also allocate a Correlation ID 1 for re-establishing the user plane connection between UE and LMF1.

At S703, AMF sends a Nlmf_Location_UPConfig Request message (which may be corresponding to the first message above) to LMF1.

The message may include re-establish indication information (which may be corresponding to the first indication information mentioned above), indicating the UE to re-establish the user plane connection with LMF1, or indicating the UE to establish a new user plane connection with LMF1.

Optionally, the message may also include release indication information (which may also be corresponding to the second indication information mentioned above), used to indicate the UE to release the original user plane connection (old user plane connection) with LMF1.

Optionally, the message may also include indication information (which may correspond to the third indication information mentioned above) indicating to release the old user plane connection before establishing the new user plane connection, or indicating to release the old user plane connection after establishing the new user plane connection, which may be briefly described as: release after/before establish indication.

Optionally, the message may include a request for LMF1 to terminate a specific user plane connection with the UE.

Optionally, the message may also include information about AMF reallocation, such as correlation ID 1.

At S704, LMF1 sends a user plane connection release command message (corresponding to the second message above) to AMF.

In some embodiments, the user plane connection release command message may be carried through a Namf_Communication_N1N2MessageTransfer message.

Optionally, the user plane connection release command message may include a re-establishment indication and a release after/before establish indication.

Optionally, the user plane connection release command message may also include correlation ID1.

Optionally, the user plane connection release command message, as well as at least one of the re-establishment indication, release after/before establish indication, or correlation ID1, may be carried through the Namf_Communication_N1N2MessageTransfer message.

At S705, AMF maps (which may also be described as convert) the correlation ID1 to routing ID1, and sends the routing ID1 together with the user plane connection release command message to UE.

Optionally, AMF may send the routing ID1 together with the user plane connection release command message to UE through the DL NAS TRANSPROT message.

At S706, UE releases the old user plane connection with LMF1 based on the re-establishment indication and/or the release after/before establish indication received in step S705.

At S707, UE keeps the PDU session even if there is no other active user plane connection.

Optionally, the UE will keep the PDU session even if there is no other active user plane connection based on the re-establishment indication and/or the release after/before establish indication received in step S705, in order to provide a basis for re-establishing a new user plane connection and shorten the delay in establishing a user plane connection.

At S708, upon receiving the re-establishment indication, UE establishes a new user plane connection with LMF1, or re-establishes the user plane connection with LMF1.

At S709, after UE release the old user plane connection with LMF1 and establishes the new user plane connection with LMF1, UE sends a user plane connection release complete message (corresponding to the fifth message above) to AMF using the routing ID1.

Optionally, the user plane connection release complete message may include re-establishment indication to indicate the completion with Routing ID1 to AMF.

Optionally, UE may send the user plane connection release complete message to AMF through the UL NAS TRANSPORT message.

At S7010, AMF forwards the message from UE to LMF1 indicated by the routing ID1, and coverts the routing ID1 to the correlation ID1.

Optionally, AMF may send the user plane connection release complete message to LMF1 through the Namf_Communication_N1MessageNotify message.

At S7011, LMF sends the Nlmf_Location_UPConfig Response message (corresponding to the sixth message above) to AMF, to inform AMF the completion of the re-establishment of the user plane connection.

The message may include the correlation ID1 and re-establish complete indication information.

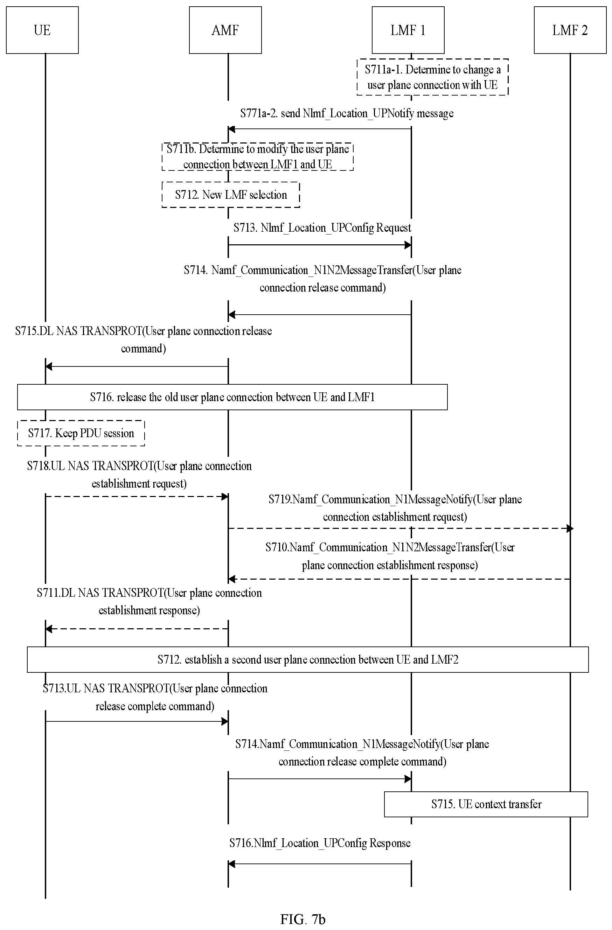

The present disclosure also provides an optional implementation for determining to modify the first user plane connection between the first terminal (UE) and the first network element (LMF1) to establish a second user plane connection between the UE and the third network element (LMF2). As shown in FIG. 7b, the process may include the following steps.

At S711a-1, LMF1 discovers a need to modify the user plane connection between UE and this LMF1.

Optionally, LMF1 may determine to release the old user plane connection before establishing a new user plane connection, or release the old user plane connection after establishing a new user plane connection.

If LMF1 selects a LMF2 (i.e. the changed LMF, which may also be described as the target LMF or the new LMF), then LMF1 (which may be described as the source LMF or the old LMF) may allocate a correlation ID2 to the selected LMF2 (which may correspond to the third network element mentioned above).

At S711a-2, LMF1 sends a Nlmf_Location_UPNotify message (which may be corresponding to the eighth message above) to AMF.

The message may include modification indication information (which may be corresponding to the first indication information mentioned above) indicating the user plane connection move (termination of old connection and establishment of new connection), indicating the UE to establish a user plane connection with LMF2.

Optionally, the message may also include the ID of LFM2 (e.g. LFM ID2).

That is to say, if LMF1 discovers a need to change LMF, this LMF1 may perform LMF selection and may select a new LMF (i.e. LMF2), and if LMF2 is selected, LMF1 will include LMF 2 ID in the message.

Optionally, LMF1 may send a release after establish indication or a release before establish indication to AMF.
optionally, LMF1 may send the correlation ID 1 and allocated correlation ID 2 to AMF.

At S711b, AMF discovers a need to modify the user plane connection between UE and LMF1.

Optionally, AMF may be out of serving area of LMF1 and in serving area of target LMF.

At S712, AMF selects the target LMF for the current UE location, based on target LMF identification received from LMF1 (i.e. LMF 2 ID) for user plane positioning, or based on LMF service area, LMF user plane positioning capability information. LMF needs to be capable to establish a user plane session for positioning with the UE.

Optionally, AMF may determine releasing the old user plane connection before establishing the new user plane connection or releasing the old user plane connection after establishing the new use plane connection.

Optionally, AMF may also allocate a Correlation ID 2 for modifying the user plane connection between UE and LMF1.

At S713, AMF sends a Nlmf_Location_UPConfig Request message (which may be corresponding to the first message above) to LMF1.

The message may include modification indication information (which may be corresponding to the first indication information mentioned above) indicating user plane connection move, used to indicate the UE to establish the user plane connection with LMF2.

Optionally, the message may also include the ID of LMF2 (e.g., LMF ID2).

Optionally, AMF may send the release after/before establish indication to LMF1.

Optionally, the message may include a request for LMF1 to terminate a specific user plane connection with the UE and the target LMF identification.

Optionally, the message may also include information about AMF reallocation, such as correlation ID 2.

At S714, LMF1 sends a user plane connection release command message (corresponding to the second message above) to AMF.

In some embodiments, the user plane connection release command message may be carried through a Namf_Communication_N1N2MessageTransfer message.

Optionally, the user plane connection release command message may include a modification indication and a release after/before establish indication.

Optionally, the user plane connection release command message may also include at least one of the correlation ID1, the LMF LCS-UP address of LMF2, or the correlation ID2.

Optionally, the user plane connection release command message, as well as at least one of the modification indication, release after/before establish indication, correlation ID1, LMF LCS-UP address of LMF2, or correlation ID2, may be carried through the Namf_Communication_N1N2MessageTransfer message.

At S715, AMF converts the correlation ID1 and correlation ID2 to routing ID1 and routing ID2, and sends the routing ID1 and routing ID2 together with the user plane connection release command to UE.

Optionally, AMF may send the routing ID1 and routing ID2 together with the user plane connection release command message to UE through the DL NAS TRANSPROT message.

At S716, UE releases the old user plane connection with LMF1 based on the modification indication and/or the release after/before establish indication received in step S715.

At S717, UE keeps the PDU session even if there is no other active user plane connection.

Optionally, the UE will keep the PDU session even if there is no other active user plane connection based on the re-establishment indication and/or the release after/before establish indication received in step S715, in order to provide a basis for re-establishing a new user plane connection and shorten the delay in establishing a user plane connection.

At S718-S7111, UE sends the user plane connection establishment request message (corresponding to the third message above) with the Routing ID2 to LMF2 via AMF, and LMF2 sends the user plane connection establishment response message (corresponding to the fourth message above) with correlation ID 2 to UE via AMF.

Optionally, UE may transmit the user plane connection establishment request to AMF through the UL NAS TRANSPORT message.

Optionally, AMF may transmit the user plane connection establishment request to LMF2 through the Namf_Communication_N1MessageNotify message.

Optionally, LMF2 may transmit the user plane connection establishment response to AMF through the Namf_Communication_N1N2MessageTransfer message.

Optionally, AMF may transmit the user plane connection establishment response to UE through the DL NAS TRANSPROT message.

At S7112, upon receiving the user plane connection establishment response, and it is indicated that LMF2 accept to establish user plane connection with the UE, UE establishes a new user plane connection with LMF2.

At S7113, after UE releases the old user plane connection with LMF1 and establishes the new user plane connection with LMF2, UE sends a user plane connection release complete message (corresponding to the fifth message above) to AMF using the routing ID1.

Optionally, UE may send the user plane connection release complete message to AMF through the UL NAS TRANSPORT message.

Optionally, the user plane connection release complete messages may include modification indication to indicate the completion with the routing ID1 to AMF.

At S7114, AMF forwards the message from UE to LMF1 indicated by the routing ID1, and coverts the routing ID1 to the correlation ID1.

Optionally, AMF may send the user plane connection release complete message to LMF1 through the Namf_Communication_N1MessageNotify message.

At S7115, LMF 1 receives the messages from UE via AMF, and transfers the UE context to LMF2.

Optionally, LMF1 transmits the UE context to LMF2 through the Nlmf_Location_LocationContextTransfer Request message (corresponding to the seventh message above).

Optionally, LMF2 may send a response message, such as the Nlmf_Location_LocationContextTransfer Response message, to LMF1.

At S7116, LMF1 sends the Nlmf_Location_UPConfig Response message (corresponding to the sixth message above) to AMF, to inform AMF the completion of the modification of the user plane connection.

The message may include the correlation ID1 and modification complete indication information.

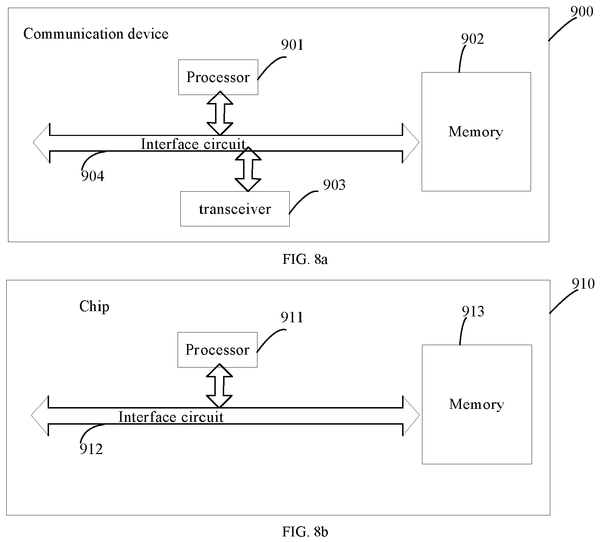

FIG. 8a is a block diagram of a communication device 900 according to embodiments of the present disclosure. The communication device 900 may be a network device (e.g., a first network element, a second network element, etc.), or a terminal (e.g., a user equipment, etc.), or a chip, chip system, or processor that supports the network device in implementing any one of the above methods, or a chip, chip system, or processor that supports the terminal in implementing any one of the above methods. The communication device 900 may be configured to implement the methods described in the above method embodiments, and for details, reference may be made to the description of the above method embodiments.

As shown in FIG. 8a, the communication device 900 includes one or more processors 901. The processor 901 may be a general-purpose processor or a special-purpose processor. For example, it may be a baseband processor or a central processing unit. The baseband processor is configured to process communication protocols and communication data, and the central processing unit is configured to control communication devices (such as base stations, baseband chips, terminals, terminal chips, DU or CU, etc.) to execute computer programs and process computer program data. Optionally, the communication device 900 is used to perform any one of the above methods. Optionally, the one or more processors 901 are configured to invoke instructions to cause the communication device 900 to perform any one of the above methods.

In some embodiments, the communication device 900 further includes one or more transceivers 903. When the communication device 900 includes one or more transceivers 903, the transceivers 903 perform at least one of the communication steps such as sending and/or receiving (e.g., at least one of steps S200a-2, S201, S202-1, S202-2, S206-1, S206-2, S207 shown in FIG. 2a, or steps S210a-2, S211, S212-1, S212-2, S215-1, S216-1, S218-1, S218-2, S219, S2110 shown in FIG. 2b, which is not limited herein) in the above methods, and the processor 901 performs at least one of other steps (e.g., at least one of steps S200a-1, S200b, S203, S204, S205 shown in FIG. 2a, or steps S210a-1, S210b, S213, S213, S214, S217 shown in FIG. 2b, which is not limited herein). In optional embodiments, the transceiver may include a receiver and/or a transmitter, which may be separate or integrated together. Optionally, the terms such as transceiver, transceiver unit, transceiver machine, transceiver circuit, interface circuit, interface may be used interchangeably; the terms such as transmitter, transmitting unit, transmitter machine, transmitting circuit may be used interchangeably; and the terms such as receiver, receiving unit, receiver machine, receiving circuit may be used interchangeably.

In some embodiments, the communication device 900 further includes one or more memories 902 for storing data. Optionally, all or part of the one or more memories 902 may be located outside the communication device 900.

In some embodiments, the communication device 900 further includes one or more transceivers 903. When the communication device 900 includes one or more transceivers 903, communication steps such as receiving and sending in the methods above are executed by the transceiver 903, and other steps are executed by the processor 901.

In some embodiments, the transceiver may include a receiver and/or a transmitter, which may be separate or integrated together. Optionally, the terms such as transceiver, transceiver unit, transceiver machine, transceiver circuit, interface circuit, interface may be used interchangeably; the terms such as transmitter, transmitting unit, transmitter machine, transmitting circuit may be used interchangeably; and the terms such as receiver, receiving unit, receiver machine, receiving circuit may be used interchangeably.

Optionally, the communication device 900 further includes one or more interface circuits 904. The interface circuit 904 is connected to the memory 902, and the interface circuit 904 may be configured to receive data from the memory 902 or other devices, and may be configured to send the data to the memory 902 or other devices. For example, the interface circuit 904 may read the data stored in the memory 902 and send the data to the processor 901.

The communication device 900 described in the above embodiments may be a network device or a terminal, but the scope of the communication device 900 described in the present disclosure is not limited thereto, and the structure of the communication device 900 may not be limited by FIG. 8a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8b is a block diagram of a chip 910 according to embodiments of the present disclosure. For the case where the communication device 900 may be a chip or a chip system, reference may be made to the block diagram of the chip 910 shown in FIG. 8b, which is not limited herein.

The chip 910 includes one or more processors 911. The chip 910 is configured to perform any one of the above methods.

In some embodiments, the chip 910 further includes one or more interface circuits 912. Optionally, the terms such as interface circuit, interface, transceiver pin may be used interchangeably. In some embodiments, the chip 910 further includes one or more memories 913 for storing data. Optionally, all or part of the one or more memories 913 may be located outside the chip 910. Optionally, the interface circuit 912 is connected to the memory 913, and the interface circuit 912 may be configured to receive data from the memory 913 or other devices, and the interface circuit 912 may be configured to send the data to the memory 913 or other devices. For example, the interface circuit 912 may read the data stored in the memory 913 and send the data to the processor 911.

In some embodiments, the interface circuit 912 performs at least one of the communication steps such as sending and/or receiving (e.g., at least one of steps S200a-2, S201, S202-1, S202-2, S206-1, S206-2, S207 shown in FIG. 2a, or steps S210a-2, S211, S212-1, S212-2, S215-1, S216-1, S218-1, S218-2, S219, S2110 shown in FIG. 2b,which is not limited herein) in the above methods. Performing, by the interface circuit 912, the communication steps such as sending and/or receiving in the above methods means, for example, that the interface circuit 912 performs data exchange among the processor 911, the chip 910, the memory 913, or a transceiver. In some embodiments, the processor 911 performs at least one of other steps (e.g., at least one of steps S200a-1, S200b, S203, S204, S205 shown in FIG. 2a, or steps S210a-1, S210b, S213, S213, S214, S217 shown in FIG. 2b, which is not limited herein).

The present disclosure also provides a program product that, when executed by the communication device 900, causes the communication device 900 to perform any one of the above methods. Optionally, the program product is a computer program product.

The present disclosure also provides a computer program that, when running on a computer, causes the computer to perform any one of the above methods.

The technical solutions described in embodiments of the present disclosure may be combined arbitrarily without conflict.

After considering the specification and practicing the solution disclosed herein, those skilled in the art will easily come up with other embodiments of the application. This disclosure is intended to cover any variations, uses, or adaptations of the present application that follow the general principles of the present application and include common knowledge or conventional technical means in the art that are not disclosed in this disclosure. The specification and embodiments are only considered exemplary, and the true scope and spirit of the application are indicated by the following claims.

It should be understood that the present application is not limited to the precise structure described above and shown in the accompanying drawings, and various modifications and changes can be made without departing from its scope. The scope of the present application is limited only by the appended claims.

## Claims

1. A communication system, comprising a first terminal, a first network element and a second network element, wherein
the first network element is configured to receive a first message sent by the second network element, the first message indicates to change a first user plane connection between the first terminal and the first network element;
the first network element is configured to send a second message to the first terminal via the second network element, the second message is configured to notify the first terminal to change the first user plane connection.

2. The system of claim 1, wherein the first message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
and/or,
wherein the second message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection.

3. The system of claim 2, further comprising a third network element, wherein the first indication information indicates to establish a second user plane connection between the first terminal and the third network element;
the second network element is further configured to forward a third message from the first terminal to the third network element, the third message is configured to request to establish the second user plane connection with the third network element.

4. The system of claim 3, wherein
the second network element is further configured to forward a fourth message from the third network element to the first terminal, the fourth message is a response message to the third message.

5. The system of claim 3 or 4, wherein the first message further comprises at least one of:
an ID of the third network element;
a correlation ID corresponding to the third network element; or
an IP address of the third network element;
and/or,
wherein the second message further comprises at least one of:
an ID of the third network element;
a correlation ID corresponding to the third network element; or
an IP address of the third network element.

6. The system of claim 2, wherein the first indication information indicates to establish a third user plane connection between the first terminal and the first network element;
the first terminal is further configured to establish a third user plane connection with the first network element based on the first indication information.

7. The system of claim 4 or 6, wherein
the first network element is further configured to receive a fifth message forwarded by the second network element from the first terminal, the fifth message is configured to notify that the first user plane connection has been released.

8. The system of claim 7, wherein
the first network element is further configured to send a sixth message to the second network element, the sixth message is configured to notify the second network element that the first user plane connection has been changed.

9. The system of claim 8, wherein
the first network element is further configured to send a seventh message to the third network element, the seventh message is configured to transmit context information of the first terminal.

10. The system of any one of claims 3-9, wherein the third message comprises at least one of:
a correlation ID corresponding to the first network element; or
a correlation ID corresponding to the third network element.

11. The system of any one of claims 4-9, wherein the fourth message comprises at least one of:
a correlation ID corresponding to the first network element; or
a correlation ID corresponding to the third network element.

12. The system of any one of claims 7-9, wherein the fifth message comprises a correlation ID corresponding to the first network element.

13. The system of claim 8 or 9, wherein the sixth message comprises a correlation ID corresponding to the first network element.

14. The system of any one of claims 1-13, wherein
the first terminal is further configured to keep a protocol data unit (PDU) session after releasing the first user plane connection.

15. The system of any one of claims 1-14, wherein
the first network element is further configured to send an eighth message to the second network element before receiving the first message sent by the second network element, the eighth message indicates to change the first user plane connection.

16. The system of claim 15, wherein the eighth message comprises at least one of:
an ID of the first network element;
a correlation ID corresponding to the first network element;
an IP address of the first network element;
an ID of the third network element;
a correlation ID corresponding to the third network element;
an IP address of the third network element;
first indication information, indicating to change the first user plane connection;
second indication information, indicating to release the first user plane connection; or
third indication information, indicating a condition for releasing the first user plane connection.

17. A communication method, applied in a first network element, comprising:
receiving a first message sent by a second network element, wherein the first message indicates to change a first user plane connection between a first terminal and the first network element; and
sending a second message to the first terminal via the second network element, wherein the second message is configured to notify the first terminal to change the first user plane connection.

18. The method of claim 17, wherein the first message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
and/or,
wherein the second message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection.

19. The method of claim 17 or 18, further comprising:
receiving a fifth message sent by the first terminal via the second network element, wherein the fifth message is configured to notify that the first user plane connection has been released; and
sending a sixth message to the second network element, wherein the sixth message is configured to notify that the first user plane connection has been changed.

20. The method of claim 19, wherein the first indication information indicates to establish a second user plane connection between the first terminal and a third network element, and the method further comprises:
sending a seventh message to the third network element, wherein the seventh message is configured to transmit context information of the first terminal.

21. The method of claim 19, wherein the first indication information indicates to establish a third user plane connection between the first terminal and the first network element.

22. The method of any one of claims 17-21, wherein before receiving the first message sent by the second network element, the method further comprises:
sending an eighth message to the second network element, wherein the eighth message indicates to change the first user plane connection.

23. A communication method, applied in a first terminal, comprising:
receiving a second message sent by a first network element via a second network element, wherein the second message is configured to notify the first terminal to change a first user plane connection with the first network element;
wherein, the second message comprises first indication information, indicating to change the first user plane connection.

24. The method of claim 23, further comprising:
keeping a protocol data unit (PDU) session after releasing the first user plane connection.

25. The method of claim 23 or 24, wherein the first indication information indicates to establish a second user plane connection between the first terminal and a third network element, and the method further comprises:
sending a third message to the third network element via the second network element, wherein the third message is configured to request to establish the second user plane connection with the third network element.

26. The method of claim 25, further comprising:
receiving a fourth message sent by the third network element via the second network element, wherein the fourth message is a response message to the third message.

27. The method of claim 23 or 24, wherein the first indication information indicates to establish a third user plane connection between the first terminal and the first network element, and the method further comprises:
establishing the third user plane connection with the first network element based on the first indication information.

28. The method of claim 26 or 27, further comprising:
sending a fifth message to the first network element via the second network element, wherein the fifth message is configured to notify that the first user plane connection has been released.

29. A communication method, applied in a second network element, comprising:
sending a first message to a first network element, wherein the first message indicates to change a first user plane connection between a first terminal and the first network element; and
sending a second message from the first network element to the first terminal, wherein the second message is configured to notify the first terminal to change the first user plane connection.

30. The method of claim 29, wherein the first message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection;
and/or,
wherein the second message comprises at least one of:
an identity (ID) of the first network element;
a correlation ID corresponding to the first network element;
an IP address of the first network element;
first indication information, indicating to change the first user plane connection;
second indication information, indicating to release the first user plane connection; or
third indication information, indicating a condition for releasing the first user plane connection.

31. The method of claim 29 or 30, further comprising:
receiving a sixth message sent by the first network element, wherein the sixth message is configured to notify the second network element that the first user plane connection has been changed.

32. The method of any one of claims 29-31, wherein before sending the first message to the first network element, the method further comprises:
receiving an eighth message sent by the first network element, wherein the eighth message indicates to change the first user plane connection.

33. A first network element, comprising:
a first transceiver module, configured to receive a first message sent by a second network element, and send a second message to a first terminal via the second network element;
wherein, the first message indicates to change a first user plane connection between the first terminal and the first network element;
the second message is configured to notify the first terminal to change the first user plane connection.

34. A second network element, comprising:
a second transceiver module, configured to send a first message to a first network element, and send a second message from the first network element to a first terminal;
wherein the first message indicates to change a first user plane connection between the first terminal and the first network element; and
the second message is configured to notify the first terminal to change the first user plane connection.

35. A first terminal, comprising:
a third transceiver module, configured to receive a second message sent by a first network element via a second network element, wherein the second message is configured to notify the first terminal to change a first user plane connection with the first network element.

36. A first network element, comprising:
one or more processors;
wherein, the first network element is configured to implement the communication method of any one of claims 17-22.

37. A second network element, comprising:
one or more processors;
wherein, the second network element is configured to implement the communication method of any one of claims 29-32.

38. A first terminal, comprising:
one or more processors;
wherein, the first terminal is configured to implement the communication method of any one of claims 23-28.

39. A computer-readable storage medium, stored with a computer program thereon, wherein the computer-readable storage medium stores executable instructions that, when loaded and executed by a processor, implement the communication method of any one of claims 17-22, or claims 23-28 or claims 29-32.
